# EUROPEAN PATENT APPLICATION

(11) **EP 3 985 893 A1**
(43) Date of publication of application: **20.04.2022**
(21) Application number: 20839819.8
(22) Date of filing: 19.05.2020
(51) Int. Cl.: H04J 14/02

(54) **METHOD FOR REDUCING UPLINK TIME DELAY OF PASSIVE OPTICAL NETWORK, AND RELATED DEVICE**

(30) Priority: 15.07.2019 CN 201910637087
(71) Applicant: ZTE Corporation, Shenzhen, Guangdong 518057 (CN)
(72) Inventor: MA, Huannan, Shenzhen, Guangdong 518057 (CN); LU, Jinshu, Shenzhen, Guangdong 518057 (CN); ZHANG, Weiliang, Shenzhen, Guangdong 518057 (CN)
(74) Representative: Raynor, Simon Mark
(86) International application number: PCT/CN2020/090935
(87) International publication number: WO 2021/008224

(57) **Abstract**

Embodiments of the present disclosure disclose a method for reducing an uplink delay of a passive optical network, and a related device. An optical line terminal (OLT) includes a basic wavelength channel unit and a corresponding extended wavelength channel unit. The basic wavelength channel unit is configured to support a basic wavelength channel and realize discovery and ranging of an optical network unit (ONU) on the basic wavelength channel; establish a first ONU management and control channel (OMCC) with the ONU on the basic wavelength channel, and in response to the ONU supporting an extended wavelength channel and being configured to be in a low delay mode, notify the ONU to switch from the basic wavelength channel to the extended wavelength channel through the first OMCC. The extended wavelength channel unit is configured to support at least one extended wavelength channel and establish a second OMCC with the ONU on the extended wavelength channel to transmit a low delay service.

## Description

### CROSS REFERENCE TO RELATED APPLICATIONS

The present application is filed based on Chinese patent application No. 201910637087.6 filed on July 15, 2019, and claims priority of the Chinese patent application. The entire content of the Chinese patent application is hereby incorporated into the present disclosure by reference.

### TECHNICAL FIELD

Embodiments of the present disclosure relate to but are not limited to a passive optical network (PON) technology, and in particular relate to a method for reducing an uplink delay of a passive optical network and related devices.

### BACKGROUND

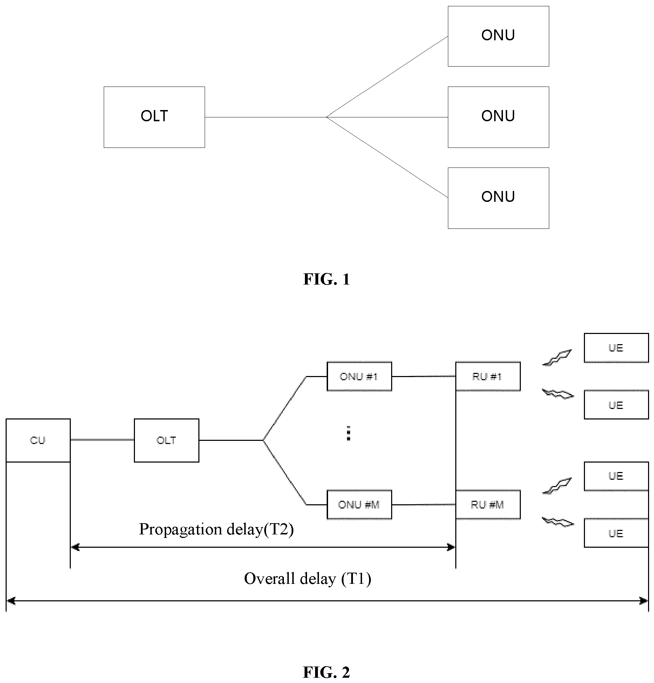

FIG. 1 shows a conventional network architecture of an passive optical network (PON). Only one wavelength channel is respectively disposed in an uplink and a downlink between an optical line terminal (OLT) and an optical network unit (ONU).

The PON is currently widely used in fiber to the home (FTTH). With the development of mobile network, a bearing technology is needed to make the PON used for mobile fronthaul, mobile backhaul, sensor networks, and vehicle to everything (V2X). It is too expensive to establish an independent optical distribution network (ODN) for a mobile bearer alone. It is necessary to consider realizing support for the mobile bearer on the basis of inheriting and compatible with the existing FTTH PON.

A propagation delay requirement of a mobile network is very strict. For example, the propagation delay beared by fifth generation mobile communication network (5G) is 100us. If the PON is used as a mobile bearing technology, problems related to the propagation delay need to be solved. Taking a mobile fronthaul application scenario as an example, based on function separation considerations, a conventional base station is divided into a remote unit (RU) and a central unit (CU). The PON may be used as a very good system and technology for connecting the RU and the CU, because the PON may reduce fiber deployment. As shown in FIG. 2, in a long term evolution (LTE) and its evolution system, a total delay (T1) between the CU and an user equipment (UE) is required to be less than 10ms, which includes a propagation delay (T2) between the CU and the RU, as well as a processing delay of each device. The propagation delay between the CU and the RU is less than 250us. On the other hand, in 5G mobile systems, the overall delay is required to be less than 4ms. For enhanced mobile broadband (eMBB) services, the propagation delay between the CU and the RU should be less than 100us.

However, the optical distribution network and registration mechanism of the PON that meets the low delay requirement are quite different from those in a conventional FTTH PON. In order to bear both a low delay service and a conventional FTTH service in a same PON, the contradiction therebetween is required to be resolved.

### SUMMARY

In view of the above technical problem, some embodiments of the present disclosure provide an optical line terminal (OLT), including: a basic wavelength channel unit and a corresponding extended wavelength channel unit. The basic wavelength channel unit is configured to support a basic wavelength channel and realize discovery and ranging of an optical network unit (ONU) on the basic wavelength channel. The basic wavelength channel unit is also configured to establish a first ONU management and control channel (OMCC) with the ONU on the basic wavelength channel, and in response to the ONU supporting an extended wavelength channel and being configured to be in a low delay mode, notify the ONU to switch from the basic wavelength channel to the extended wavelength channel through the first OMCC. The extended wavelength channel unit is configured to support one or more extended wavelength channels, and establish a second OMCC with the ONU on the extended wavelength channel to transmit a low delay service. The ONU supports switching between the basic wavelength channel and the extended wavelength channel.

Some embodiments of the present disclosure also provide an optical network unit (ONU), including: a media access control (MAC) module and a corresponding optical module. The optical module includes two or more sub-optical modules, and the sub-optical modules respectively correspond to different wavelengths. The MAC module is connected to a first sub-optical module to support a basic wavelength channel, and the MAC module is connected to other sub-optical modules to support one or more extended wavelength channels. Alternatively, the optical module is a wavelength tunable optical module, and the wavelength tunable optical module corresponds to different wavelengths. The MAC module is connected to the optical module to support switching between the basic wavelength channel and the extended wavelength channel.

Some embodiments of the present disclosure also provide a passive optical network (PON) system, including: an optical line terminal (OLT), an optical distribution network (ODN), and an optical network unit (ONU). The OLT is configured to support a basic wavelength channel and one or more corresponding extended wavelength channels. The ONU is configured to support switching between the basic wavelength channel and the extended wavelength channel. The OLT is connected to the ONU through the ODN, and the ODN supports bearing a basic wavelength channel signal and an extended wavelength channel signal. The OLT is configured to realize discovery and ranging of the ONU on the basic wavelength channel; also configured to establish a first ONU management and control channel (OMCC) with the ONU on the basic wavelength channel; in response to the ONU supporting the extended wavelength channel and being configured to be in a low delay mode, notify the ONU to switch from the basic wavelength channel to the extended wavelength channel through the first OMCC; and establish a second OMCC with the ONU on the extended wavelength channel to transmit a low delay service.

Some embodiments of the present disclosure also provide a method for reducing an uplink delay of a passive optical network, including: an optical line terminal (OLT) realizing discovery and ranging of an optical network unit (ONU) on a basic wavelength channel; establishing a first ONU management and control channel (OMCC) with the ONU on the basic wavelength channel, and in response to the ONU supporting extended wavelength channels and being configured to be in a low delay mode, notifying the ONU to switch from the basic wavelength channel to the extended wavelength channel through the first OMCC; establishing a second OMCC with the ONU on the extended wavelength channel to transmit a low delay service; the OLT supporting the basic wavelength channel and one or more extended wavelength channels, and the ONU supporting switching between the basic wavelength channel and the extended wavelength channel.

Some embodiments of the present disclosure also provide a method for reducing a uplink delay of a passive optical network, including: an optical network unit (ONU) registering with an optical line terminal (OLT) on a basic wavelength channel; establishing a first ONU management and control channel (OMCC) with the OLT on the basic wavelength channel, receiving a notification from the OLT through the first OMCC, switching from the basic wavelength channel to an extended wavelength channel; and establishing a second OMCC with the OLT on the extended wavelength channel to transmit a low delay service.

Other features and advantages of the present disclosure will be described in the following description, and partly become obvious from the description, or understood by implementing the present disclosure. The purpose and other advantages of the present disclosure may be realized and obtained through structures specifically pointed out in the specification, claims and drawings.

### BRIEF DESCRIPTION OF THE DRAWINGS

The accompanying drawings are used to provide a further understanding of the technical solution of the present disclosure, and constitute a part of the specification. Together with the embodiments of the present disclosure, the accompanying drawings are used to explain the technical solution of the present disclosure, and do not constitute a limitation to the technical solution of the present disclosure.
FIG. 1 is a schematic diagram of a conventional network architecture of a passive optical network.
FIG. 2 is a schematic diagram of an application scenario that an existing PON system supports mobile fronthaul.
FIG. 3 is a schematic structural diagram of an optical line terminal (OLT) according to an embodiment of the present disclosure.
FIG. 4 is a schematic structural diagram of an optical network unit (ONU) according to an embodiment of the present disclosure.
FIG. 5 is a schematic structural diagram of an optical network unit (ONU) according to an embodiment of the present disclosure.
FIG. 6 is a schematic structural diagram of a passive optical network (PON) system according to an embodiment of the present disclosure.
FIG. 7 is a schematic structural diagram of a passive optical network (PON) system according to another embodiment of the present disclosure.
FIG. 8 is a schematic structural diagram of a passive optical network (PON) system according to yet another embodiment of the present disclosure.
FIG. 9 is a schematic structural diagram of a passive optical network (PON) system according to still a further embodiment of the present disclosure.
FIG. 10 is a schematic structural diagram of a passive optical network (PON) system according to one additional embodiment of the present disclosure.
FIG. 11 is a schematic flowchart of a method for reducing an uplink delay of a passive optical network according to an embodiment of the present disclosure.
FIG. 12 is a schematic flowchart of a method for reducing an uplink delay of a passive optical network according to another embodiment of the present disclosure.

### DETAILED DESCRIPTION

In order to make the purpose, the technical solution, and the advantages of the present disclosure clearer, embodiments of the present disclosure will be explained below in detail with reference to the accompanying drawings. It should be noted that the embodiments in the present disclosure and the features in the embodiments may be combined with each other arbitrarily in cases of no conflict.

The operations shown in the flowcharts of the accompanying drawings may be executed in a computer system such as by a set of computer-executable instructions. And, although a logical sequence is shown in the flowchart, in some cases, the operations shown or described may be performed in a different order as that described herein.

Propagation delays in a passive optical network include: an optical propagation delay, a bandwidth allocation delay, and a delay caused by opening a quiet window for discovering an optical network unit (ONU).

Herein, the optical propagation delay is related to an optical fiber distance and a wavelength, and the propagation delay is fixed for specific optical fiber distance and wavelength. For example, a propagation time of a 1310nm wavelength signal in a 20KM optical fiber is about 100us. An optical propagation time may be reduced by shortening the optical fiber distance, for example, limiting 20KM to 10KM (too short optical fiber distance may limit a range of users that a single optical line terminal (OLT) may access).

Herein, the bandwidth allocation delay is related to an allocation algorithm and an allocation cycle. A response delay of the allocation algorithm may be eliminated by using a fixed bandwidth allocation algorithm, but the bandwidth is unable to be effectively statistically multiplexed in this case. Using a smaller allocation cycle may reduce a time slice interval and shorten a time slice scheduling delay. However, since a burst overhead of each time slice is fixed, when a bandwidth allocation cycle is reduced, a number of ONUs under the OLT needs to be set up correspondingly, to ensure a reasonable bandwidth utilization rate. For example, the number of ONUs may be limited to be less than 8 when the allocation cycle of dynamic bandwidth allocation (DBA) is changed to 1/4 of 125us.

Herein, the quiet window is opened for discovering the OLT and ranging the ONU, which is an overhead caused by initialization of a channel connection between the OLT and the ONU. In order to find an ONU with a maximum distance of 20KM from the OLT, a quiet window of 200 microseconds must be opened. During this period, an operating ONU is unable to communicate with the OLT normally. On the other hand, in order to discover the ONU quickly, the OLT needs to periodically open the quiet window to discover the ONU. ONUs to be registered and activated may send uplink signals in the quiet window, and other normally operating ONUs that have completed registration and activation are unable to send the uplink signals in the quiet window. Therefore, if the normally operating ONUs happen to have uplink data to send at the beginning of the quiet window, the normally operating ONUs have no chance to send the uplink data until the end of the quiet window. In this case, the uplink data sent by the normally operating ONU may cause a delay of up to 200 microseconds. When ONU information and the optical fiber distance are known in advance, a discovery and testing process may be removed to eliminate the delay caused by opening the quiet window.

Therefore, by reducing the number of ONUs, shortening the optical fiber distance, adopting the fixed bandwidth allocation, and eliminating the opening of quite window for ranging, the passive optical network may meet a requirement of low time delay for a mobile bearer. However, a conventional FTTH service requires to have a large splitting ratio, a large access range, a high bandwidth statistical multiplexing efficiency, and a convenient opening of quite window. An optical distribution network and registration mechanism of the passive optical network that meets the low delay requirement is quite different from those in a conventional FTTH passive optical network. It is necessary to resolve the contradiction between the passive optical network that meets the low delay requirement and the conventional FTTH passive optical network, in order to bear both a low delay service and the conventional FTTH service in the same passive optical network.

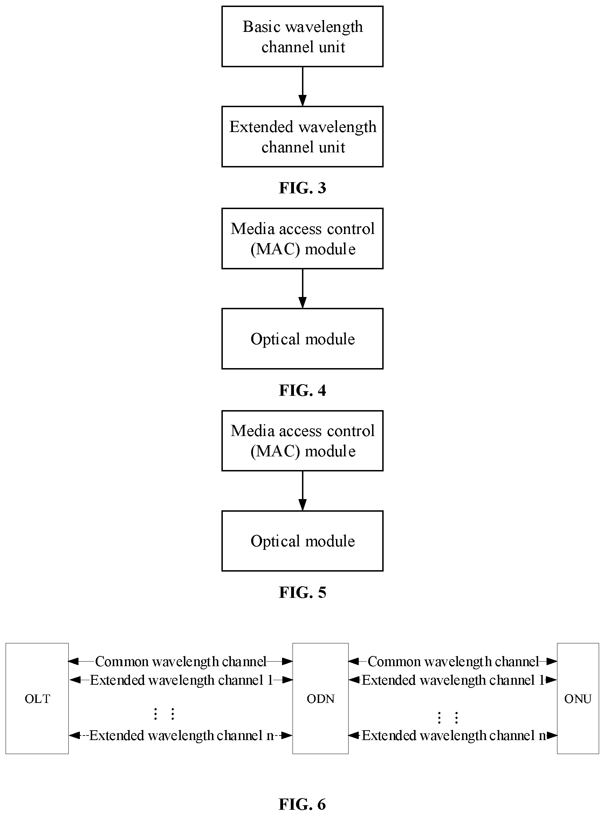

FIG. 3 is a schematic structural diagram of an optical line terminal (OLT) according to an embodiment of the present disclosure. As shown in FIG. 3, the OLT includes: a basic wavelength channel unit and a corresponding extended wavelength channel unit.

The basic wavelength channel unit is configured to support a basic wavelength channel and realize discovery and ranging of an optical network unit (ONU) on the basic wavelength channel. The basic wavelength channel unit is also configured to establish a first ONU management and control channel (OMCC) with the ONU on the basic wavelength channel, and in response to the ONU supporting an extended wavelength channel and being configured to be in a low delay mode, notify the ONU to switch from the basic wavelength channel to the extended wavelength channel through the first OMCC.

The extended wavelength channel unit is configured to support one or more extended wavelength channels, and establish a second OMCC with the ONU on the extended wavelength channel to transmit a low delay service.

The ONU supports switching between the basic wavelength channel and the extended wavelength channel.

Herein, the OLT further includes: a demultiplexer.

The basic wavelength channel unit includes: a basic channel media access control MAC module and a corresponding basic channel optical module.

The extended wavelength channel unit includes: one or more extended channel MAC modules and one or more corresponding extended channel optical modules, and one extended channel MAC module corresponds to one extended channel optical module.

A plurality of optical modules correspond to different wavelengths respectively. The basic channel optical module is connected to the demultiplexer to support the basic wavelength channel; the one or more extended channel optical modules are connected to the demultiplexer to support the one or more extended wavelength channels.

Herein, the extended wavelength channel adopts a fixed bandwidth or a small bandwidth allocation period.

Herein, the extended wavelength channel unit is further configured to compute a round-trip time of a corresponding extended wavelength channel on the extended wavelength channel according to a ranging result of the basic wavelength channel as well as wavelength characteristics of the extended wavelength channel and the basic wavelength channel, and adjust an equalization delay (EqD) of the ONU

FIG. 4 is a schematic structural diagram of an optical network unit (ONU) according to an embodiment of the present disclosure. As shown in FIG. 4, the ONU includes: a media access control (MAC) module and a corresponding optical module.

The optical module includes two or more sub-optical modules, and the sub-optical modules respectively correspond to different wavelengths. The MAC module is connected to a first sub-optical module to support a basic wavelength channel, and the MAC module is connected to other sub-optical modules to support one or more extended wavelength channels.

FIG. 5 is a schematic structural diagram of an optical network unit (ONU) according to an embodiment of the present disclosure. As shown in FIG. 5, the ONU includes: the media access control (MAC) module and the corresponding optical module.

The optical module is a wavelength tunable optical module, and the wavelength tunable optical module corresponds to different wavelengths. The MAC module is connected to the optical module to support switching between the basic wavelength channel and the extended wavelength channel(s).

FIG. 6 is a schematic structural diagram of a passive optical network (PON) system according to an embodiment of the present disclosure. As shown in FIG. 6, the PON system includes: an optical line terminal (OLT), an optical distribution network (ODN) and an optical network unit (ONU).

The OLT is configured to support a basic wavelength channel and one or more extended wavelength channels. The ONU is configured to support switching between the basic wavelength channel and the extended wavelength channel(s).

The OLT is connected to the ONU through the ODN, and the ODN is configured to support bearing basic wavelength channel signals and extended wavelength channel signals.

The OLT is configured to realize discovery and ranging of the ONU on the basic wavelength channel. The OLT is also configured to establish a first ONU management and control channel (OMCC) with the ONU on the basic wavelength channel, and in response to the ONU supporting the extended wavelength channel and being configured to be in a low delay mode, notify the ONU to switch from the basic wavelength channel to the extended wavelength channel through the first OMCC; and establish a second OMCC with the ONU on the extended wavelength channel to transmit a low delay service.

Herein, the OLT is further configured to compute a round-trip time of a corresponding extended wavelength channel on the extended wavelength channel according to a ranging result of the basic wavelength channel as well as wavelength characteristics of the extended wavelength channel and the basic wavelength channel, and adjust an equalization delay (EqD) of the ONU

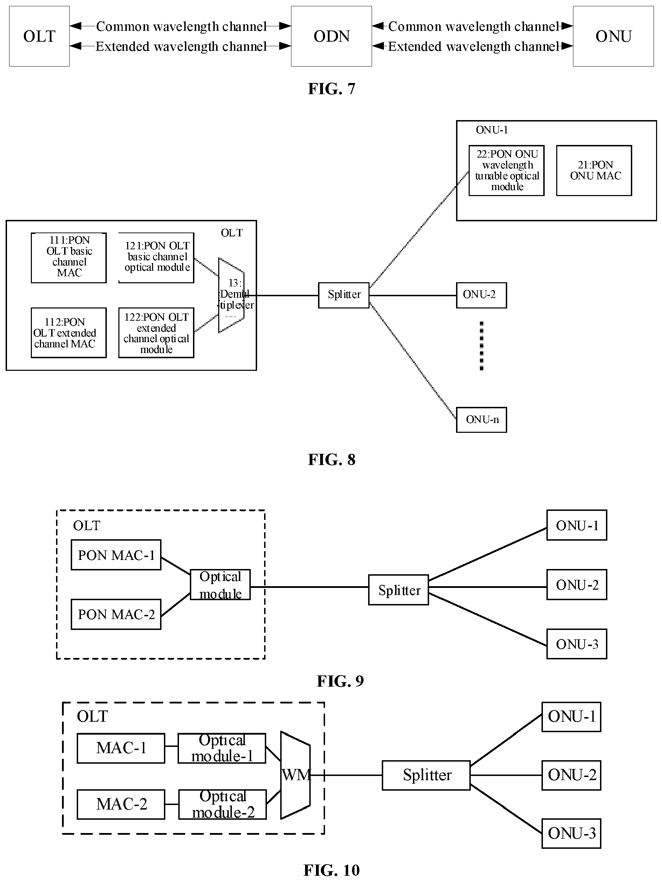

FIG. 7 is a schematic structural diagram of a passive optical network (PON) system according to another embodiment of the present disclosure. As shown in FIG. 7, the PON system includes: an optical line terminal (OLT), an optical distribution network (ODN) and an optical network unit (ONU).

Herein, the OLT is configured to support a basic wavelength channel and an extended wavelength channel. All discovery and ranging of ONU as well as ordinary ONU service transmission are completed on the basic wavelength channel, and low delay ONU service transmission is performed on the extended wavelength channel.

An uplink and a downlink of the OLT respectively support a plurality of channels with different wavelengths, one of the plurality of channels is the basic wavelength channel and one or more of the plurality of channels are the extended wavelength channels. A grouping relationship between the basic wavelength channel and the extended wavelength channel(s), that is, a corresponding relationship between the basic wavelength channel and the extended wavelength channel(s), is controlled through software configuration.

Herein, the ONUs are divided into ordinary ONUs and low delay ONUs. The ordinary ONUs use the basic wavelength channel to bear ordinary services. The low delay ONUs support switching between the basic wavelength channel and the extended wavelength channel, completing the discovery and ranging of ONU on the basic wavelength channel, and transmit a low delay service on the extended wavelength channel.

As shown in FIG. 7, in this embodiment, the uplink and the downlink of the OLT respectively support one basic wavelength channel and one corresponding extended wavelength channel. In this example, the ONUs are all the low delay ONUs.

Specifically, the low delay ONUs support an optical module in receiving and transmitting wavelength switching or tuning, and the ONUs may choose to operate on the basic wavelength channel or the extended wavelength channel at different time.

Herein, the ODN adopts a power splitter to realize point-to-multipoint topological connection.

Specifically, it is supported to bear basic wavelength channel signals and extended wavelength channel signals in the same ODN simultaneously.

Herein, the basic wavelength channel independently completes the discovery and ranging and the service transmission of the ordinary ONUs, and the basic wavelength channel and the extended wavelength channel cooperate to realize the discovery and ranging and low delay service transmission of the low delay ONUs.

Specifically, the discovery and ranging of the ONU are performed on the basic wavelength channel, and a ranging result of the basic wavelength channel is synchronized to the extended wavelength channel. The extended wavelength channel computes a round-trip time of a corresponding extended wavelength based on the ranging result of the basic wavelength channel as well as wavelength characteristics of the extended wavelength channel and the basic wavelength channel, thus obtaining a ranging of the ONU. The extended wavelength channel does not perform the discovery and ranging process of the ONU, thereby eliminating the delay caused by opening a window.

Herein, a fixed bandwidth and a smaller bandwidth allocation period may be used for the extended wavelength channel to further reduce the delay. The use of the fixed bandwidth and the smaller bandwidth allocation period on the extended wavelength channel may not affect a bandwidth of the ONU on a basic PON channel.

In addition, the basic wavelength channel may be compatible with ordinary ONU access and ordinary service bearing, and a number of the ONUs on the basic wavelength channel may not affect a delay of the ONUs on the extended wavelength channel.

The technical solution provided by the embodiment of the present disclosure adopts a PON system that combines the basic wavelength channel and the extended wavelength channel, to additionally support the low delay service on the basis of an ordinary PON.

FIG. 8 is a schematic structural diagram of a passive optical network (PON) system according to another embodiment of the present disclosure.

In this embodiment, the PON system includes: an optical line terminal (OLT), an optical distribution network (ODN), and an optical network unit (ONU).

Herein, an uplink and a downlink of the OLT respectively support two or more channels with different wavelengths. In FIG. 8, two channels, namely an ordinary wavelength channel and a corresponding extended wavelength channel, are supported, which is only an illustrative description, and does not constitute a limitation to the embodiment of the present disclosure. For example, more than two channels, for example, one ordinary wavelength channel and one or more corresponding extended wavelength channels, may be supported.

Herein, the ONU supports an optical module in receiving and transmitting wavelength switching or tuning.

Specifically, an ONU side may access ordinary ONUs and low delay ONUs. Both the ordinary ONU and the low delay ONU have only one media access control (MAC). The low delay ONUs adopts wavelength switchable or wavelength tunable optical modules, or a plurality of independent optical modules corresponding to a plurality of extended wavelength channels.

Herein, one ONU may only choose to operate at one wavelength channel at a time. For ONUs adopting the wavelength switchable or wavelength tunable optical modules, although the optical module supports multiple wavelengths, the optical module only supports one wavelength at a time. The optical module may be controlled to operate at a specific wavelength through a switch for switching wavelength or a wavelength tuning mechanism. For ONUs adopting the plurality of independent optical modules corresponding to the plurality of extended wavelength channels, only an optical module with a specified wavelength is in operation state at a time by controlling a switch of the optical module.

Herein, the ODN may use a splitter to realize point-to-multipoint topological connection.

In this embodiment, one or more extended wavelength channels are added on the basis of an original PON architecture. On an OLT side, a plurality of channels correspond to a plurality of media access control (MAC) modules, where one MAC module corresponds to a basic PON channel, and other one or more MAC modules correspond to one or more extended wavelength channels. The OLT may adopt a plurality of optical modules to cooperate with an external multi/demultiplexer to multiplex a plurality of channel signals into the same ODN, or may multiplex a plurality of wavelength channels within the optical module. For example, as shown in FIG. 8, the OLT includes: a PON OLT basic channel MAC module 111, a PON OLT extended channel MAC module 112, a PON OLT basic channel optical module 121, a PON OLT extended channel optical module 122. A low delay ONU-1 includes: a PON ONU MAC module and a PON ONU wavelength tunable optical module. Other ONUs may also be set as the ordinary ONUs or the low delay ONUs. Herein, there may be a plurality of 122, corresponding to different wavelengths respectively, and the three parts 121, 122, and a splitter 13 may be integrated into one optical module entity (built-in splitter, supporting the plurality of wavelength channels). When there are a plurality of corresponding 122, the PON ONU wavelength tunable optical module also needs to support a plurality of wavelengths.

The low delay ONU adopts different wavelengths during a registration phase and an operation phase, corresponding to a basic wavelength channel and the extended wavelength channel respectively. The low delay ONU operates on the basic wavelength channel during an offline state and a registration process. After the discovery and ranging of the low delay ONU are completed, the OLT determines whether to switch the ONU to the extended wavelength channel according to ONU capabilities and OLT configuration. A discovery process is no longer carried out in the extended wavelength channel, and operation is performed according to ONU identification information and a ranging result obtained in the basic wavelength channel. For example, the ranging result of the basic wavelength channel is synchronized to the extended wavelength channel, and the extended wavelength channel computes a round trip time of a corresponding extended wavelength channel based on the ranging result of the basic wavelength channel as well as wavelength characteristics of the extended wavelength channel and the basic wavelength channel to obtain an ONU ranging on the extended channel. Since the discovery and ranging process is not performed on the extended wavelength channel, a delay caused by introducing a window for discovery and ranging may be avoided.

Herein, ordinary ONU registration and ranging as well as ordinary service transmission may be performed in the basic wavelength channel; the low delay ONU may also be compatible with the ordinary ONU for ordinary service transmission.

In addition, specific PON technology standards may have different options, such as (but not limited to): a Gigabit-capable passive optical network (G-PON), a 10-Gigabit-capable passive optical network (XG-PON), a 10-Gigabit-capable symmetric passive optical network (XGS-PON) or an Ethernet passive optical network (EPON) and a 10 Gb/s Ethernet passive optical network (lOG-EPON).

In this embodiment, the GPON standard is used as an example to illustrate that the basic wavelength channel and the extended wavelength channel cooperate to realize a registration and service transmission process of the low delay ONU(s), including the following operations.

The discovery and registration of ONU is performed on the basic wavelength channel.

1.1. The OLT regularly opens a quiet window on the basic wavelength channel and sends a serial number (SN) request.

1.2. When a new ONU needs to be online or after the ONU is offline, the ONU waits for the quiet window opened by the OLT on the basic wavelength channel and captures the SN request, and then competes to send a SN in the quiet window.

1.3 The OLT obtains the SN of the new ONU on the basic wavelength channel.

1.4 The OLT allocates an ONU-ID to the ONU on the basic wavelength channel, continues to open a ranging window, and sends a ranging request to the ONU

1.5 The ONU sends a ranging response on the basic wavelength channel.

1.6 The OLT obtains the ranging response, computes a ranging result of the basic wavelength channel and sends the ranging result to the ONU

1.7 An ONU management and control channel (OMCC) is established between the OLT and the ONU

1.8 The OLT obtains a supporting ability of the ONU for an extended wavelength channel.

1.9 The OLT determines whether the ONU is switched to the extended wavelength channel according to the ONU's supporting ability for the extended wavelength channel and configuration of the ONU on the OLT. If a switching is not required, the ONU works as an ordinary ONU on the basic wavelength channel. If switching to the extended wavelength channel is required, the following operations are performed.

Herein, the OLT may send a message to the ONU to obtain whether the ONU supports the extended wavelength channel, and determine whether the ONU supports the extended wavelength channel according to the response message of the ONU. The ONU may be configured on the OLT to bear ordinary services or low delay services. The message that the OLT queries whether the ONU supports the extended wavelength channel may adopt a physical layer operation and maintenance management (PLOAM) message or an ONU management and control interface (OMCI) message.

2.0 The OLT synchronizes the ONU-ID and ranging information from the basic wavelength channel to a corresponding extended wavelength channel.

2.1 The OLT notifies the ONU to switch the wavelength channel on the basic PON channel. After receiving a switching command, the ONU adjusts the receiving and sending wavelength of the optical module to a wavelength corresponding to a specified extended wavelength channel.

Herein, the OLT may notify the ONU to switch the wavelength by using the OMCI message or the PLOAM message.

2.2 The OLT adjusts an equalization delay (EqD) of the ONU switched to the extended wavelength channel on the extended wavelength channel.

Herein, since optical signals with different wavelengths have different propagation time in the same length of optical fiber, the EqD computed in the basic wavelength channel is used as an initial value of the EqD of the extended channel, and then the EqD is adjusted on the extended wavelength channel according to alignment of ONU uplink information received by the OLT.

2.3 The OLT and the ONU perform bandwidth allocation and service transmission after an OMCC chain establishment is completed on the extended wavelength channel.

Herein, a fixed bandwidth and a smaller bandwidth allocation period may be used on the extended wavelength channel to further reduce the delay. The use of the fixed bandwidth and the smaller bandwidth allocation period on the extended wavelength channel may not affect a bandwidth of the ONU on a basic PON channel.

In this embodiment, there is no need to perform ONU discovery and ONU ranging processes on the extended wavelength channel, but directly enter an operation state. When the ONU restores to an initial state from an offline state, the wavelength is switched to a wavelength corresponding to the basic wavelength channel.

Registration processes of other PON technology standards are similar to the GPON process, except that there are differences in specific exchange messages. For example, for the GPON, the PLOAM message and the OMCI message are used for interaction and control in the registration process. If the EPON is adopted, a multi-point control protocol (MPCP) packet and an operation administration and maintenance (OAM) packet are used for interaction and control in a registration process.

FIG. 9 is a schematic structural diagram of a passive optical network (PON) system according to another embodiment of the present disclosure.

In this embodiment, the PON system includes: an optical line terminal (OLT), a splitter, and optical network units ONU-1, ONU-2, and ONU-3.

Herein, the ONU-1 and the ONU-2 correspond to ordinary FTTH services, the ONU-3 corresponds to low delay services. An OLT PON MAC-1 corresponds to a basic wavelength channel, and an OLT PON MAC-2 corresponds to an extended wavelength channel. That is, the ONU-1 and the ONU-2 are ordinary ONUs, and the ONU-3 is a low delay ONU

Herein, the OLT includes a PON MAC-1, a MAC-2, and an optical module connected to the PON MAC-1 and the MAC-2 respectively. The optical module has a built-in splitter which supports the basic wavelength channel and the extended wavelength channel.

A grouping relationship (correspondence relationship) between the PON MAC-1 and the PON MAC-2 is configured on the OLT. The MAC-2 does not enable a periodic windowing mechanism. The ONU-1 and the ONU-2 are configured in a normal mode. The ONU-3 is configured for the low delay service. On an OLT PON MAC-1, the ONU-1 and the ONU-2 may register and perform service transmission according to a standard XGSPON standard process. The ONU-3 may first perform a discovery and registration process on the OLT PON MAC-1 and then switch to an OLT PON MAC- 2 to carry out service transmission.

In this embodiment, a process from ONU-3 registration to starting to perform service transmission includes the following operations.

1. The ONU-3 performs ONU discovery and registration on the OLT PON MAC-1, including the following operations.

1.1 The OLT regularly opens a quiet window on the PON MAC-1 and sends a SN request.

1.2 The ONU-3 waits for a SN request message sent by the OLT PON MAC-1 on the basic wavelength channel using a downlink 1577nm/uplink 1270nm wavelength, and then competes to send a SN message in the quiet window.

1.3 The OLT obtains a SN of the ONU-3 on the PON MAC-1.

1.4 The OLT allocates an ONU-ID to the ONU-3 on the PON MAC-1, continues to open a ranging window and sends a ranging request to the ONU

1.5 The ONU-3 sends a ranging response message on the basic wavelength channel.

1.6 The OLT PON MAC-1 obtains the ranging response message, computes a ranging result of a basic PON channel and sends the ranging result to the ONU-3.

1.7 An OMCC is established on the basic wavelength channel between the OLT PON MAC-1 and the ONU-3.

1.8 The OLT obtains a supporting ability of the ONU-3 for the extended wavelength channel.

2. The OLT determines whether the ONU is switched to the extended wavelength channel based on that the ONU-3 supports the extended wavelength channel and the OLT configures the ONU with a low latency mode, and the following operations are performed.

2.1 The OLT synchronizes the identification and ranging information of the ONU-3 from the PON MAC-1 to the PON MAC-2.

2.2 The OLT sends a message to the ONU-3 on the PON MAC-1 to notify the ONU to switch from the basic wavelength channel using the downlink 1577nm/uplink 1270nm to the extended wavelength channel using the downlink 1490nm/uplink 1310nm; after receiving the switching command, the ONU-3 adjusts the receiving and sending wavelength of the optical module to a downlink 1490nm/ uplink 1310nm wavelength.

2.3 The OLT adjusts an equalization delay (EqD) of the ONU-3 on the PON MAC-2.

Herein, an ONU-3 uplink signal arrival time is monitored on the PON MAC-2, and in response to the deviation exceeding a certain threshold, the EqD is adjusted.

2.4 The OLT PON MAC-2 and ONU-3 perform bandwidth allocation and service transmission after an OMCC chain establishment is completed on the extended wavelength channel.

Herein, a fixed bandwidth and a smaller bandwidth allocation period may be used on the extended wavelength channel to further reduce the delay. The use of the fixed bandwidth and the smaller bandwidth allocation period on the extended channel may not affect a bandwidth of the ONU on a basic PON channel.

FIG. 10 is a schematic structural diagram of a passive optical network PON system according to another embodiment of the present disclosure.

In this embodiment, the PON system includes: an optical line terminal (OLT), a splitter, and optical network units ONU-1, ONU-2, and ONU-3.

Herein, the OLT includes a MAC-1 and a MAC-2, an optical module-1 and an optical module-2 connected to the MAC-1 and the MAC-2 respectively, and a wavelength division multiplexer (WM) connected to the optical module-1 and the optical module-2 respectively.

Specifically, one optical module is connected to one MAC interface, and a MAC module operates in a XGSPON mode. The optical modules may include optical modules with different wavelengths. One of the optical modules uses a wavelength of downlink 1577nm/uplink 1270nm (corresponding to a standard XGSPON wavelength) for a basic wavelength channel, other(s) of optical modules uses a time and wavelength division multiplexed passive optical network (TWDM-PON) wavelength for an extended wavelength channel. Single-channel OLT optical modules with different wavelengths cooperate with an external WM to realize the basic wavelength channel and the extended wavelength channel. If a PON port needs to support low delay services, a multi/demultiplexer is added on an OLT side of an ODN network, and two or more OLT optical modules with different wavelengths are connected to the same ODN (splitter) through the multi/demultiplexer. The splitter connects to ordinary ONUs and low delay ONUs respectively, and the low delay ONUs are configured for the low delay services. When a number of ODN branches is sufficient but the bandwidth does not meet requirements of newly added ONUs or bandwidth expansion, OLT PON ports with different wavelengths are added to link to the same ODN for capacity expansion.

In this embodiment, the ONU-1 and the ONU-2 correspond to ordinary FTTH services, and the ONU-3 corresponds to the low delay services. That is, the ONU-1 and the ONU-2 are the ordinary ONUs, and the ONU-3 is the low delay ONU.

The OLT MAC-1 and the optical module-1 correspond to the basic wavelength channel. The OLT MAC-2 and the optical module-2 correspond to the extended wavelength channel. An operating wavelength of the optical module-1 is downlink 1577nm/uplink 1270nm, and an operating wavelength of the optical module-2 is downlink 1596nm/uplink 1528nm.

A grouping relationship between the MAC-1 and the MAC-2 is configured on the OLT. The MAC-2 does not enable a periodic windowing mechanism. The ONU-1 and the ONU-2 are configured in normal mode. The ONU-3 is configured for the low delay services. On an OLT PON MAC-1, the ONU-1 and the ONU-2 may register and perform service transmission according to a standard XGSPON standard process. The ONU-3 may first discover and register on the OLT PON MAC-1 and then switch to an OLT PON MAC-2 to carry out service transmission.

In this embodiment, a process from ONU-3 registration to starting to perform service transmission includes the following operations.

1. The ONU-3 performs ONU discovery and registration on OLT PON MAC-1, including the following operations.

1.1 The OLT regularly opens a quiet window on the PON MAC-1 and sends a SN request.

1.2 The ONU-3 waits for a SN request message sent by the OLT PON MAC-1 on the basic wavelength channel using a downlink 1577nm/uplink 1270nm wavelength, and then competes to send a SN message in the quiet window.

1.3 The OLT obtains a SN of the ONU-3 on the PON MAC-1.

1.4 The OLT allocates an ONU-ID to the ONU-3 on the PON MAC-1, continues to open a ranging window and sends a ranging request to the ONU

1.5 The ONU-3 sends a ranging response message on the basic wavelength channel.

1.6 The OLT PON MAC-1 obtains the ranging response message, computes a ranging result of the basic wavelength channel and sends the ranging result to the ONU-3.

1.7 An OMCC is established on the basic wavelength channel between the OLT PON MAC-1 and the ONU-3.

1.8 The OLT obtains ONU-3's supporting ability for the extended wavelength channel.

2. The OLT determines whether the ONU is switched to the extended wavelength channel based on the ONU-3 supports the extended wavelength channel and the OLT configures the ONU with a low delay mode, and the following operations are performed.

2.1 The OLT synchronizes identification and ranging information of the ONU-3 from the PON MAC-1 to the PON MAC-2.

2.2 The OLT sends a message to the ONU-3 on the PON MAC-1 to notify this ONU to switch from the basic wavelength channel using the downlink 1577nm/uplink 1270nm to the extended wavelength channel using the downlink 1596nm/uplink 1528nm; after receiving a switching command, the ONU-3 adjusts the receiving and sending wavelength of the optical module to a downlink 1596nm/uplink 1528nm wavelength.

2.3 The OLT adjusts an EqD of the ONU-3 on the PON MAC-2.

Herein, an ONU-3 uplink signal arrival time is monitored on the PON MAC-2, and in response to the deviation exceeding a certain threshold, the EqD is adjusted.

2.4 The OLT PON MAC-2 and the ONU-3 perform bandwidth allocation and service transmission after an OMCC chain establishment is completed on the extended wavelength channel.

Herein, a fixed bandwidth and a smaller bandwidth allocation period may be used on the extended wavelength channel to further reduce the delay. The use of the fixed bandwidth and the smaller bandwidth allocation period on the extended channel may not affect a bandwidth of the ONU on a basic PON channel.

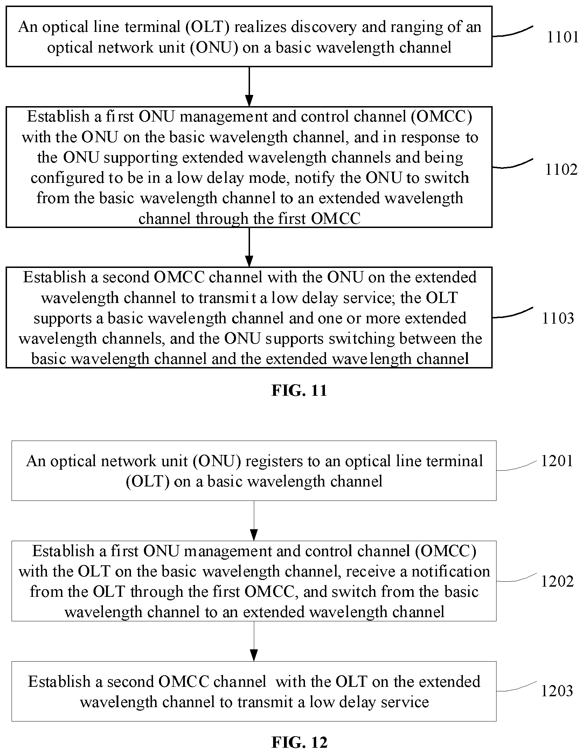

FIG. 11 is a schematic flowchart of a method for reducing an uplink delay of a passive optical network according to an embodiment of the present disclosure. As shown in FIG. 11, the method includes the following operations.

In operation 1101, an optical line terminal (OLT) realizes discovery and ranging of an optical network unit (ONU) on a basic wavelength channel.

In operation 1102, a first ONU management and control channel (OMCC) is established with the ONU on the basic wavelength channel, and in response to the ONU supporting an extended wavelength channel and being configured to be in a low delay mode, notify the ONU to switch from the basic wavelength channel to the extended wavelength channel through the first OMCC.

In operation 1103, a second OMCC channel is established with the ONU on the extended wavelength channel to transmit a low delay service.

The OLT supports the basic wavelength channel and one or more extended wavelength channels. The ONU supports switching between the basic wavelength channel and the extended wavelength channel.

Herein, the extended wavelength channel adopts a fixed bandwidth or a small bandwidth allocation period.

Herein, the method also includes: the OLT computes a round-trip time of a corresponding extended wavelength channel on the extended wavelength channel according to a ranging result of the basic wavelength channel, and wavelength characteristics of the extended wavelength channel and the basic wavelength channel, and adjusts an equalization delay (EqD) of the ONU

FIG. 12 is a schematic flowchart of a method for reducing an uplink delay of a passive optical network according to another embodiment of the present disclosure. As shown in FIG. 12, the method includes the following operations.

In operation 1201, an optical network unit (ONU) registers to an optical line terminal (OLT) on a basic wavelength channel.

In operation 1202, a first ONU management and control channel (OMCC) is established with the OLT on the basic wavelength channel; in response to receiving a notification from the OLT through the first OMCC, switching from the basic wavelength channel to an extended wavelength channel.

In operation 1203, a second OMCC channel is established with the OLT on the extended wavelength channel to transmit a low delay service.

The technical solutions provided by the embodiments of the present disclosure have the following technical effects.

1. Performance improvement: The discovery and ranging window processes are canceled on the extended PON channel, and the low delay services are transmitted through the extended channel, which greatly reduces the delay.

2. Compatibility: Since the present solutions are compatible with the ordinary ONUs, the ordinary services are continually beared by the ordinary ONUs, avoiding the increase in terminal costs for the ordinary services due to some low delay services.

3. Scalability: The expanded PON channels may be added to the existing ODN with ordinary service access, according to the requirements of the low delay services, avoiding the addition of new ODN networks and the reconstruction of ODN networks. The ONU services on the basic PON channel and the extended PON channel in the same ODN network are independent. The number of ONUs on the basic PON channel may not affect the delay of the ONU on the extended PON channel. The use of the fixed bandwidth and the relative smaller bandwidth allocation cycle on the extended channel may not affect the bandwidth of the ONU on the basic PON channel.

A person of ordinary skill in the art can understand that all or some of the operations, system, functional modules/units of the device in the methods disclosed above may be implemented as software, firmware, hardware, and appropriate combinations thereof. In a hardware implementation, the division between functional modules/units mentioned in the above description does not necessarily correspond to the division of physical components. For example, a physical component may have multiple functions, or a function or operation may be performed by several physical components cooperatively. Some or all of the components may be implemented as software executed by a processor, such as a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is known to the ordinary skill in the art, the term computer storage medium includes volatile and non-volatile, removable and non-removable medium implemented in any method or technology for storing information (such as computer-readable instructions, data structures, program modules, or other data). Computer storage mediums include but are not limited to a random access memory (RAM), a read-only memory (ROM), an electrically erasable programmable read-only memory (EEPROM), a flash memory or other memory technologies, a compact disc read-only memory (CD-ROM), a digital video disc (DVD) or other optical disk storage, a magnetic cassette, a magnetic tape, a magnetic disk storage or other magnetic storage devices, or any other medium used to store desired information and that may be accessed by a computer. In addition, as is well known to those of ordinary skill in the art, communication mediums usually contain a computer-readable instruction, a data structure, a program module, or other data in a modulated data signal such as a carrier wave or other transmission mechanisms, and may include any information delivery medium.

## Claims

1. An optical line terminal (OLT), comprising:
a basic wavelength channel unit, configured to:
support a basic wavelength channel, and realize discovery and ranging of an optical network unit (ONU) on the basic wavelength channel,
establish a first ONU management and control channel (OMCC) with the ONU on the basic wavelength channel, and
in response to the ONU supporting an extended wavelength channel and being configured to be in a low delay mode, notify the ONU to switch from the basic wavelength channel to the extended wavelength channel through the first OMCC; and
a corresponding extended wavelength channel unit, configured to:
support at least one extended wavelength channel, and
establish a second OMCC with the ONU on a respective extended wavelength channel to transmit a low delay service;
wherein the ONU is configured to support switching between the basic wavelength channel and the at least one extended wavelength channel.

2. The OLT according to claim 1, further comprises a demultiplexer;
the basic wavelength channel unit comprises a basic channel media access control (MAC) module and a corresponding basic channel optical module;
the extended wavelength channel unit comprises at least one extended channel MAC module and at least one corresponding extended channel optical module, and a respective extended channel MAC module corresponds to a respective extended channel optical module; and
a plurality of optical modules respectively correspond to different wavelengths; the basic channel optical module is connected to the demultiplexer to support the basic wavelength channel; the at least one extended channel optical module is connected to the demultiplexer to support at least one expanded wavelength channel.

3. The OLT according to claim 1, wherein, the extended wavelength channel is configured to adopt a fixed bandwidth or a small bandwidth allocation period.

4. The OLT according to claim 1, wherein, the extended wavelength channel unit is further configured to:
compute a round-trip time of a corresponding extended wavelength channel on the extended wavelength channel according to a ranging result of the basic wavelength channel as well as wavelength characteristics of the extended wavelength channel and the basic wavelength channel, and,
adjust an equalization delay (EqD) of the ONU

5. An optical network unit (ONU), comprising a media access control (MAC) module and a corresponding optical module; wherein the ONU is configured as one of:
(i) the optical module comprises at least two sub-optical modules, and the at least two sub-optical modules respectively correspond to different wavelengths;
the MAC module is connected to a first sub-optical module of the at least two sub-optical modules to support a basic wavelength channel, and the MAC module is further connected to other of the at least two sub-optical modules to support at least one extended wavelength channel;
(ii) the optical module is a wavelength tunable optical module, and the wavelength tunable optical module corresponds to different wavelengths;
the MAC module is connected to the optical module to support switching between the basic wavelength channel and the at least one extended wavelength channel.

6. A passive optical network (PON) system, comprising an optical line terminal (OLT), an optical distribution network (ODN) and an optical network unit (ONU);
the OLT is configured to support a basic wavelength channel and at least one corresponding extended wavelength channel; the ONU is configured to support switching between the basic wavelength channel and the at least one extended wavelength channel;
the OLT is connected to the ONU through the ODN, and the ODN is configured to support bearing a basic wavelength channel signal and an extended wavelength channel signal; and
the OLT is further configured to:
realize discovery and ranging of the ONU on the basic wavelength channel;
establish a first ONU management and control channel (OMCC) with the ONU on the basic wavelength channel;
in response to the ONU supporting the extended wavelength channel and being configured to be in a low delay mode, notify the ONU to switch from the basic wavelength channel to the at least one extended wavelength channel through the first OMCC; and
establish a second OMCC with the ONU on a respective extended wavelength channel to transmit a low delay service.

7. A method for reducing an uplink delay of a passive optical network, applied to an optical line terminal (OLT), comprising:
realizing discovery and ranging of an optical network unit (ONU) on a basic wavelength channel;
establishing a first ONU management and control channel (OMCC) with the ONU on the basic wavelength channel, and in response to the ONU supporting an extended wavelength channel and being configured to be in a low delay mode, notifying the ONU to switch from the basic wavelength channel to the extended wavelength channel through the first OMCC;
establishing a second OMCC with the ONU on the extended wavelength channel to transmit a low delay service;
wherein the OLT is configured to support the basic wavelength channel and at least one extended wavelength channel; the ONU is configured to support switching between the basic wavelength channel and the at least one extended wavelength channel.

8. The method according to claim 7, wherein the at least one extended wavelength channel is configured to adopt a fixed bandwidth or a small bandwidth allocation period.

9. The method according to claim 7, further comprising:
computing, by the OLT, a round-trip time of a corresponding extended wavelength channel on the extended wavelength channel according to a ranging result of the basic wavelength channel as well as wavelength characteristics of the extended wavelength channel and the basic wavelength channel; and
adjusting an equalization delay (EqD) of the ONU

10. A method for reducing an uplink delay of a passive optical network, applied to an optical network unit (ONU) and comprising:
registering to an optical line terminal (OLT) on a basic wavelength channel;
establishing a first ONU management and control channel (OMCC) with the OLT on the basic wavelength channel, receiving a notification from the OLT through the first OMCC, and switching from the basic wavelength channel to an extended wavelength channel; and
establishing a second OMCC with the OLT on the extended wavelength channel to transmit a low delay service.
